(19) Europäisches Patentamt
European Patent Office
Office européen des brevets

(11) Veröffentlichungsnummer: **0 068 241**
**B1**

# (12) EUROPÄISCHE PATENTSCHRIFT

(45) Veröffentlichungstag der Patentschrift: **14.05.86**

(51) Int. Cl.⁴: **C 08 G 59/14**, C 09 D 5/46

(21) Anmeldenummer: **82105140.6**

(22) Anmeldetag: **12.06.82**

## (54) Stickstoffbasische Gruppen tragendes Polyadditions/Polykondensationsprodukt und seine Verwendung.

(30) Priorität: **19.06.81 DE 3124089**

(43) Veröffentlichungstag der Anmeldung: **05.01.83 Patentblatt 83/1**

(45) Bekanntmachung des Hinweises auf die Patenterteilung: **14.05.86 Patentblatt 86/20**

(84) Benannte Vertragsstaaten: **AT BE DE FR GB IT NL SE**

(56) Entgegenhaltungen:
**EP-A-0 041 619**
**EP-A-0 043 935**
**DE-A-2 934 467**
**DE-B-2 357 075**

(73) Patentinhaber: **BASF Aktiengesellschaft, Carl-Bosch-Strasse 38, D-6700 Ludwigshafen (DE)**

(72) Erfinder: **Kempter, Fritz, Erdmann, Dr., L 2, 14, D-6800 Mannheim (DE)**
Erfinder: **Schupp, Eberhard, Dr., Tilsiter Weg 4, D-6830 Schwetzingen (DE)**

EP 0 068 241 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft durch Protonierung mit Säure wasserverdünnbare, stickstoffbasische Gruppen tragende Polyadditions/Polykondensationsprodukte aus Mannichbasen und Epoxidharz sowie deren Verwendung für die kathodische Elektrotauchlackierung.

Aus den DE-PS 23 57 075, DE-AS 24 19 179 und DE-OS 27 55 906 sind bereits Lackbindemittel bekannt, die durch Polyaddition von Mannichbase an Epoxidharz erhalten worden sind, wobei als Mannichbasen Kondensationsprodukte aus kondensiertem Phenol mit mindestens zwei phenolischen Hydroxylgruppen pro Molekül, einem sekundären Amin mit Hydroxyalkylgruppe und Formaldehyd verwendet werden.

Die dort beschriebenen Bindemittel ergeben – aus Lackbädern, die einen verhältnismässig hohen pH-Wert (über 7,0) aufweisen, kataphoretisch auf Metallteile aufgetragen – ausgezeichnete Beschichtungen, besitzen jedoch hinsichtlich der Lager- und Badstabilität gewisse Schwächen, sowie eine unerwünscht hohe Alkylamin-Emission beim Härten der Beschichtungen.

In der EP-A-4 16 19 wird ein Verfahren zur Herstellung von Polyadditionsprodukten beschrieben, die die Gruppierung

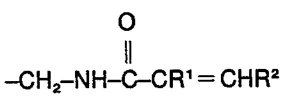

enthalten, worin $R^1$ und/oder $R^2$ für Wasserstoff oder eine Methylgruppe stehen.

Die in der EP-A-4 39 35 beschriebenen Polyadditions/Polykondensationsprodukte enthalten zwingend Gruppen der Formel

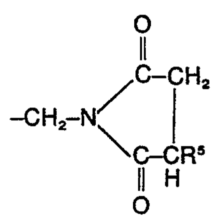

,

worin $R^5$ für einen Polydienylrest steht.

Aufgabe der vorliegenden Erfindung ist es, stickstoffbasische Polyadditions/Polykondensationsprodukte aufzuzeigen, die die oben genannten Nachteile nicht aufweisen oder zumindest wesentlich verbessert sind.

Dieses Ziel lässt sich dadurch erreichen, dass zum Aufbau der Polyadditions/Polykondensationsprodukte zumindest teilweise ein- oder mehrkernige Mono- und/oder Polyphenole verwendet werden, die Gruppierungen der allgemeinen Formel (I)

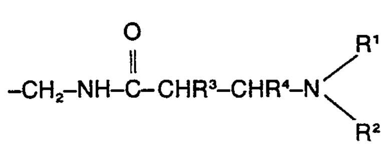

(I)

tragen.

Gegenstand der vorliegenden Erfindung sind durch Protonierung mit Säure wasserverdünnbare, stickstoffbasische Gruppen tragende Polyadditions/Polykondensationsprodukte, erhalten durch Polyaddition von

A)

5 bis 90 Gew.% Mannichbasen aus

(a) Mono- und/oder Polyphenolen

(b) mindestens einem sekundären Amin ($b_1$), das mindestens eine Hydroxyalkylgruppe enthält, oder einem Gemisch aus einem derartigen sekundären Amin ($b_1$) mit einem anderen sekundären Amin ($b_2$)

und

(c) Formaldehyd oder einer Formaldehyd liefernden Verbindung mit

B)

10 bis 95 Gew.% mindestens eines Epoxidharzes, die dadurch gekennzeichnet sind, dass die Polyadditions/Polykondensationsprodukte aus A) und B) an aromatische Ringe gebundene Gruppen der Formel (I)

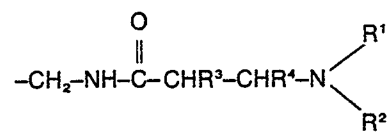

(I)

tragen, worin $R^1$ und $R^2$ untereinander gleich oder verschieden sind und für einen Alkylrest mit 1 bis i Kohlenstoffatomen, eine Hydroxyalkyl- oder Alkoxyalkylgruppe mit 2 bis 10 Kohlenstoffatomen stehen oder miteinander zu einem 5- oder 6-gliedrigen Ring verknüpft sind, $R^3$ und $R^4$ untereinander gleich oder verschieden sind und für Wasserstoff oder eine Methylgruppe stehen, mit der Massgabe, dass Polyadditions/Polykondensationsprodukte aus (A) und (B), die neben den Gruppen der Formel (I) Gruppen der Formel

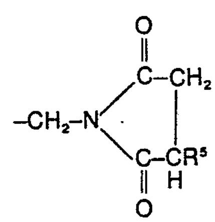

,

worin $R^5$ für einen Polydienylrest steht, ausgenommen sind.

Bevorzugt werden zur Herstellung der Mannichbasen (A) Mono- und/oder Polyphenole verwendet, die aus

$a_1$) mindestens einem ein- oder mehrkernigen Mono- und/oder Polyphenol, das zumindest teilweise durch

$a_2$) ein ein- oder mehrkerniges Mono- und/oder Polyphenol ersetzt ist, das Gruppen der allgemeinen Formel (I)

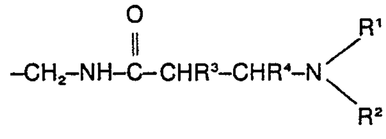

(I)

trägt, wobei $R^1$ bis $R^4$ die oben angegebene Bedeutung haben, bestehen.

Bevorzugt sind ausserdem solche Polyadditions/Polykondensationsprodukte, für die als Komponente (B) Umsetzungsprodukte von Polyepoxidverbindungen mit geringeren als den äquivalenten Mengen an ein- oder mehrkernigen Mono- und/oder Polyphenolen ($a_2$) verwendet worden sind.

Bevorzugt sind ferner die Verwendung von Diethanolamin als Komponente ($b_1$) oder eines Gemisches aus Diethanolamin ($b_1$) und einem anderen sekundären Amin als Komponente ($b_2$) sowie Umsetzungsprodukte ein- oder mehrkerniger Mono- und/oder Polyphenole mit N-Methylol (meth)acrylamid, wobei an die C–C-Doppelbindungen des (Meth)acrylamids sekundäre Amine addiert werden, als Komponente ($a_2$).

Gegenstand der vorliegenden Erfindung ist auch die Verwendung dieser Polyadditions/Polykondensationsprodukte als Bindemittel für die kathodische Elektrotauchlackierung metallischer Gegenstände.

Die erfindungsgemässen Polyadditions/Polykondensationsprodukte weisen gegenüber den in den oben genannten DE-PS, -AS, -OS und DE-OS 27 55 906 beschriebenen Lackbindemitteln eine deutlich verbesserte Lager- und Badstabilität auf und zeigen bei Verwendung Alkanolamin-modifizierter Michaeladdukte eine niedrigere Dialkylaminemission.

Hinsichtlich der Einführung der Gruppen der allgemeinen Formel (I) ist festzustellen, dass an die C–C-Doppelbindungen der Gruppierung

$$-CH_2-NH-\overset{\overset{\displaystyle O}{\|}}{C}-CR^3=CHR^4$$

zweckmässigerweise vor der Mannichreaktion sekundäre Amine addiert werden (Michael-Addition), wobei diese C–C-Doppelbindungen praktisch vollständig verbraucht werden.

Es ist z.B. aber auch möglich, der Tscherniac-Einhornreaktion von Acryl- bzw. Methacrylamid zunächst die Michael-Addition folgen zu lassen und dann die Phenolgruppen des resultierenden Reaktionsproduktes mit einem Überschuss an Polyepoxid umzusetzen und schliesslich die noch vorhandenen Epoxidgruppen dieses Umsetzungsproduktes mit Mannichbasen zur Reaktion zu bringen.

Auch auf dem vorstehend beschriebenen Weg ist die Herstellung von die Gruppierung

$$-CH_2-NH-\overset{\overset{\displaystyle O}{\|}}{C}-CR^3=CHR^4$$

aufweisenden Reaktionsprodukten aus (A) und (B) möglich. Wegen der Möglichkeit der Reaktion mit Aminen, die insbesonders bei der Herstellung aber auch in den Lackbädern als z.B. Diethanolamin anwesend sein können, ist dieser Weg jedoch weniger vorteilhaft.

Der Polyadditionsreaktion geht im allgemeinen immer eine Polykondensation voraus.

Zu den Aufbaukomponenten der erfindungsgemässen Polyadditions/Polykondensationsprodukte ist im einzelnen folgendes auszuführen.

(A) Herstellung der Mannichbase

a) Als Mono- und/oder Polyphenole (a) bzw. ($a_1$) kommen die üblichen, insbesondere ein- oder mehrkernige Mono- oder Polyphenole in Betracht, wie z.B. Phenol, seine Mono- bzw. Dialkylderivate mit 1 bis 18 Kohlenstoffatomen in den Alkylgruppen, z.B. o- und p-Kresol, p-tert.-Butylphenol, Naphthole, wie α- und β-Naphthol, ®Cardanol, sowie insbesondere mehrwertige Phenole, die einen oder mehrere aromatische Reste enthalten, vorzugsweise Bisphenol A oder Novolake, ganz allgemein Phenolgruppen enthaltende Indanderivate gemäss der US-PS 2 989 534,

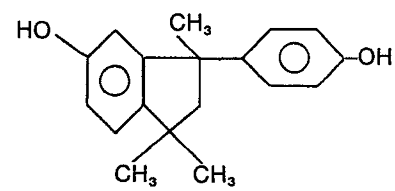

Phenolgruppen enthaltende Cumaron- und Inden-Harze, sowie Phenolgruppen enthaltende Butadien- und Isopren-homo- oder Copolymerisate z.B. nach DE-OS 27 55 906 und Ethergruppen enthaltende Polyphenole nach DE-AS 24 19 179.

Besonders geeignet als Komponente (a) sind Phenole der allgemeinen Formel

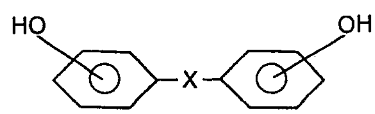

wobei die OH-Gruppen in ortho- und/oder para-Stellung zu X stehen und X für einen geradkettigen oder verzweigten zweiwertigen aliphatischen Rest mit 1 bis 3 Kohlenstoffatomen oder für $>SO_2$, $>SO$, $>S$, $>C=O$ und $-O-$ steht; vorzugsweise geeignet ist Bisphenol A. Weiterhin geeignet sind die Alkylderivate dieser mehrkernigen Phenole.

Zur Herstellung der erfindungsgemässen Lackbindemittel eignet sich als Komponente (a) auch ein Mannichkondensationsprodukt aus mindestens einem Phenol und/oder Alkylphenol, primärem Amin und Formaldehyd oder Formaldehyd liefernden Verbindung, wie in der DE-OS 27 11 385 beschrieben.

Geeignete Phenole zur Herstellung dieser zuletzt genannten Mannichkondensationsprodukte sind Phenol oder Alkylphenole, vorzugsweise Monoalkylphenole mit 1 bis 18, insbesondere 3 bis 12 Kohlenstoffatomen im geradkettigen, verzweigten oder cyclischen Alkylrest, wie Hexyl-, Nonyl-, Dodecyl- und tert.-Butylphenol. Nonyphenol (z.B. auch technisches Nonyphenol mit 85% 4-Nonylphenol) und

p-tert.-Butylphenol, sowie vorzugsweise Gemische dieser Alkylphenole mit Phenol. Auch 3-Alkylenphenole, wie z.B. das aus Cashew-Nussschalenöl gewinnbare ®Cardanol, welches im wesentlichen aus 3-(8,11)-Pentadecadienyl)-phenol bestehend beschrieben wird, sind geeignet. Ein Teil des unsubstituierten Phenols kann auch durch Bisphenol A ersetzt sein. Als primäre Amine kommen in Frage Monoalkylamine mit 2 bis 13, vorzugsweise 2 bis 6 Kohlenstoffatomen im geradkettigen, verzweigten oder cyclischen Alkylrest, wie Butyl-, Hexyl-, Octyl-Amin sowie hydroxyl- und alkoxylsubstituierte Monoalkylamine, wie Monoethanolamin und Monoisopropanolamin, 2-Alkoxyethylamine, wie 2-Methoxyethylamin und 2-Ethoxyethylamin sowie Gemische dieser genannten Amine.

Zur Herstellung dieser als Komponente (a) verwendbaren Mannichkondensationsprodukte werden (Alkyl-)- Phenol, sekundäres Amin und Formaldehyd oder Formaldehyd liefernde Verbindungen zweckmässigerweise in solchen Mengen miteinander umgesetzt, dass auf 2 Mole (Alkyl-)Phenol mindestens 1 Mol des sekundären Amins kommen, entsprechend einer Mindestmenge von 2 Molen Formaldehyd.

($a_2$) Die Komponente ($a_2$) ist ein ein- oder mehrkerniges Mono und/oder Polyphenol, das Gruppen der allgemeinen Formel (I)

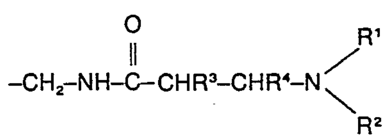 (I)

trägt, worin $R^1$ und $R^2$ untereinander gleich oder verschieden sind und für einen Alkylrest mit 1 bis 9 Kohlenstoffatomen, eine Hydroxyalkyl- oder Alkoxyalkylgruppe mit 2 bis 10 Kohlenstoffatomen stehen oder miteinander zu einem 5- oder 6-gliedrigen Ring verknüpft sind, $R^3$ und $R^4$ untereinander gleich oder verschieden sind und für Wasserstoff oder eine Methylgruppe stehen. Gruppen der allgemeinen Formel I werden im allgemeinen durch die säurekatalysierte Tscherniac-Einhornreaktion von Phenolen mit N-Methylolamiden der Acryl- bzw. Methacrylsäure eingeführt, die im allgemeinen bei Temperaturen von 30 bis 150 °C, vorzugsweise 50 bis 120 °C durchgeführt wird. Für die im Anschluss daran stattfindende Michaeladdition ist vorzugsweise ein Temperaturbereich von 70 bis 120 °C anzuwenden.

Durch den Einbau der Gruppierung (I) im Zusammenhang mit dem Vorhandensein o-Alkanolamino-(Alkylamino)methylphenolgruppierungen werden andere als die für Mannichbasen übliche Vernetzungsmöglichkeiten geschaffen.

(b) Als sekundäre Amine ($b_1$) kommen sekundäre Amine mit mindestens einer Hydroxyalkylgruppe oder Gemische von ($b_1$) mit anderen Hydroxyalkylgruppen-freien sekundären Aminen ($b_2$) in Betracht.

Als sekundäre Amine ($b_1$), die mindestens eine Hydroxyalkylgruppe enthalten eignen sich beispielsweise Alkylethanolamine oder Alkylisopropanolamine mit 1 bis 6 Kohlenstoffatomen in der Alkylgruppe. Bevorzugt sind jedoch Dialkanolamine, insbesondere Diethanolamin sowie Gemische dieser (Di)-Alkanolamine mit anderen sekundären Aminen ($b_2$).

Die sekundären Amine ($b_1$), in den Mannichbasen (A) als Diethanolaminomethylgruppen mit Alkylethanolaminomethylgruppen eingebaut, sind für den Grad der Dispergierbarkeit der Bindemittel in dem gewünschten pH-Bereich von 6,0 bis 10,0 und teilweise für die Vernetzung des Systems von wesentlicher Bedeutung.

Als sekundäre Amine ($b_2$), die gegebenenfalls zusammen mit den Hydroxyalkylgruppen-haltigen Aminen ($b_1$) für die Herstellung der Mannichbasen (A) eingesetzt werden, eignen sich solche der allgemeinen Formel

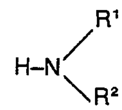

wobei $R^1$ und $R^2$ gleich oder verschieden sind und für einen geradkettigen oder verzweigten aliphatischen Rest mit 1 bis 9, vorzugsweise 3 bis 8 Kohlenstoffatomen, oder eine Alkoxyalkylgruppe mit 2 bis 10 Kohlenstoffatomen stehen, oder miteinander zu einem 5- oder 6-gliedrigen Ring verknüpft sind. Derartige geeignete sekundäre Amine ($b_2$) sind beispielsweise Di-n-butylamin, Di-n-propylamin, Diisopropylamin, Di-n-pentylamin, Di-n-hexylamin, Di-n-octylamin, Di-2-ethylhexylamin und Di-2-alkoxyethylamine, wie z.B. Di-2-methoxy-, Di-2-ethoxy- oder Di-2-butoxyethylamin, sowie Piperazine, wie z.B. N-Hydroxyethylpiperazin oder auch Morpholin, Piperidin sowie vorzugsweise auch N,N,N'-Trimethylalkylendiamine.

Die sekundären Amine (b) sind sowohl für die Herstellung der Mannichbasen als auch für die Michael-Addition zu verwenden, wobei in diesem Fall Amine ($b_1$) besonders Diethanolamin bevorzugt sind.

Bevorzugt geeignet sind von diesen gegebenenfalls mitzuverwendenden sekundären Aminen auch Di-n-butylamin, Di-n-hexylamin und Di-n-octylamin, Di-2-ethylhexylamin sowie Di-2-alkoxyethylamine und ihre Gemische. Die Wirkungsweise dieser sekundären Amine ($b_2$) besteht vornehmlich in der Beeinflussung der Stabilitätseigenschaften der Bindemittel, ausserdem tragen sie zum Verlauf und zur «inneren Weichmachung» der aus den Bindemitteln hergestellten Lackschichten bei.

(c) Als Formaldehyd bzw. Formaldehyd liefernde Verbindungen werden vorzugsweise alkoholische, wie z.B. butanolische Formaldehydlösungen oder Paraformaldehyd oder deren Gemische verwendet.

Die Herstellung der Mannichbasen (A) erfolgt nach den üblichen in der Literatur angegebenen Methoden, wie z.B. Houben-Weyl, Methoden der organischen Chemie, Band XI/1, Seite 731, 1957, zu entnehmen ist. Die Wahl der Lösungsmittel wird den geänderten Polaritätsverhältnissen angepasst. Es ist zweckmässig, höhere Alkohole, Cycloaliphaten oder Alkylaromaten neben polaren Lösungsmitteln mitzuverwenden.

Die Mengenverhältnisse der eingesetzten Ausgangsstoffe ergeben sich aus den jeweils angestrebten Eigenschaften, wobei das Gewichtsverhältnis der Komponente ($a_1$) zur Komponente ($a_2$) 1:0,1 bis 1:15, bevorzugt 1:0,5 bis 1:10 und das Gewichtsverhältnis der sekundären hydroxylgruppenhaltigen Amine ($b_1$) zu anderen sekundären Alkylaminen ($b_2$) 1:0 bis 1:3 betragen kann.

Die Mengenverhältnisse der Ausgangsstoffe ($a_1$), ($a_2$) und (b) werden zur Herstellung der Komponente (A) zweckmässigerweise so gewählt, dass auf jede phenolische Hydroxylgruppe des Gemisches der Komponenten ($a_1$) und ($a_2$) etwa 0,3 bis 2,0, vorzugsweise 0,5 bis 1,5 Mole der Komponente (b) kommen.

Die zur Herstellung der Mannichbase (A) einzusetzende Menge an (c) beträgt mindestens 1 Mol bezogen auf 1 Mol (b).

Durch Variation der Mengenverhältnisse der sekundären Amine lassen sich Eigenschaften der erfindungsgemässen Polyaddition/Polykondensationsprodukte, insbesonder die Elektrotauchbad- und Schicht-Eigenschaften wunschgemäss beeinflussen: über das gewählte Mengenverhältnis Diethanolamin bzw. Alkylethanolamin und Di-n-butylamin, Di-n-hexylamin, Di-2-ethylhexylamin, Di-n-octylamin und Di-2-alkoxyethylamin können die Dispergierbarkeit des Bindemittels, die Reaktivität, Verlaufseigenschaften, Vernetzung, Elastizität sowie der Korrosionsschutz eingestellt werden.

Eine besonders bevorzugte Ausführungsform der vorliegenden Erfindung besteht darin, dass die Herstellung der Mannichbasen mit einer formaldehydliefernden Verbindung, z.B. Paraformaldehyd, in Mengen, die dem verwendeten Aminanteil praktisch äquivalent sind, im allgemeinen jedoch einen 25%igen Überschuss nicht überschreiten, in einem Alkohol, wie Isopropanol oder Isobutanol, durchgeführt wird und dass die Komponente (A) direkt, d.h. ohne nachfolgende Umsetzung, mit weiterem Formaldehyd mit der Komponente (B) zur Reaktion gebracht wird.

Im allgemeinen wird die Umsetzung der Komponente (A) mit der Komponente (B) so gesteuert, dass die entstehenden erfindungsgemässen Polyadditions/Polykondensationsprodukte mittlere Molekulargewichte von 800 bis 5000, vorzugsweise 1000 bis 3000 aufweisen und dass phenolische Endgruppen, also (Di)alkanolaminomethylphenol- bzw. Dialkylamino-methyl-phenolgruppen vorliegen. Bevorzugt enthalten die Bindemittel etwa 0,5 bis 7,5 Gew.% Diethanolamin als die Dialkanolaminomethylphenol-Gruppe eingebaut.

Die Umsetzung der Komponente (A) mit der Komponente (B) erfolgt im allgemeinen bei Temperaturen von 20 bis 100 °C, vorzugsweise von 60 bis 100 °C, bevorzugt 70 bis 80 °C in organischen Lösungsmitteln, wie z.B. Alkoholen mit 3 bis 15 Kohlenstoffatomen in der Alkylgruppe und Glykolethern sowie Alkylaromaten, wie Toluol u.a. und Cycloaliphaten.

Die Mannichkondensationsprodukte (A) werden zur Herstellung der erfindungsgemässen Elektrotauchlackbindemittel in einer Menge von 5 bis 90 Gew.%, vorzugsweise 15 bis 60 Gew.%, mit 10 bis 95 Gew.%, vorzugsweise 30 bis 95 Gew.%, Epoxidharz (B) umgesetzt, dabei kann die Komponente ($a_2$) bei der Herstellung der Komponente (A) anwesend sein, oder erst nach der Herstellung der Komponente ($a_1$) zugesetzt werden. Durch den Grad der Veretherung der phenolischen Komponenten ($a_1$ und $a_2$) mit dem Epoxidharz (B) können insbesondere die Stabilitäts-, aber auch andere wesentliche Eigenschaften, wie z.B. die Spannungsfestigkeiten, beeinflusst werden.

Wird die Umsetzung in Gegenwart von geringen Mengen quarternierbaren tertiären Aminen, namentlich solchen, die mindestens eine Methylgruppe enthalten, durchgeführt, so entstehen Produkte, die quartäre Ammoniumgruppen enthalten, was zur Erhöhung des pH-Wertes der hergestellten Elektrotauchbäder erwünscht sein kann.

Als Epoxidharze kommen die üblichen Polyepoxidverbindungen in Frage, vorzugsweise Polyepoxid-Verbindungen mit 2 bis 3 Epoxidgruppen im Molekül, wie z.B. Umsetzungsprodukte von mehrwertigen Phenolen, besonders solchen der unter ($a_1$) erwähnten Formel

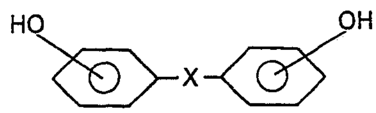

mit Epichlorhydrin, aber auch die oben erwähnten Reaktionsprodukte von mehrwertigen Alkoholen, wie z.B. Pentaerythrit, Trimethylolpropan oder Glycerin mit Epichlorhydrin. Geeignet sind alle gegebenenfalls Ethergruppen enthaltenden Di- oder Polyole, die nach der Einführung des Glycidylrestes noch freie OH-Gruppen besitzen, oder völlig frei von alkoholischen OH-Gruppen sind. Weiterhin eignen sich epoxidgruppenhaltige Umsetzungsprodukte von Epoxidharzen mit primären oder sekundären Aminen oder hydroxylgruppenhaltigen Glykolethern; ferner Epoxidharze, die Heteroatome, wie Schwefel, eingebaut enthalten. Geeignet sind auch geblockte Urethangruppen enthaltende Epoxidharze, wie sie in der DE-OS 25 54 080 und 25 41 801 beschrieben sind. Ganz allgemein sind alle Harzkörper geeignet, die 1,2-Epoxidgruppen enthalten und sich aus der Klasse der Polyacrylat-, Polyether-, Polyester- und Polyurethan-Harze sowie von Polybutadien- und anderen Ölen herleiten.

Andere geeignete Verbindungen aus Harzen mit Epoxidgruppen sind stickstoffhaltige Diepoxide, wie sie beschrieben sind in der US-PS

3 365 471, Epoxiharze von 1,1-Methylen-bis-(5-substituiertem Hydantoin) (US-PS 3 391 097), Diepoxide mit Bis-imiden (US-PS 3 450 711), epoxydierte Aminomethyldiphenyloxide (US-PS 3 312 664), aliphatische und heterocyclische N,N'-Diglycidylverbindungen (z.B. nach US-PS 3 503 979), Aminoepoxyphosphonate (GB-PS 1 172 916), 1,3,5-Triglycidylisocyanurate und andere in der Technik bekannte Materialien, die Epoxidgruppen enthalten.

Um die zur Harzbildung aus den Komponenten (A) und (B) bevorzugte höhere Funktionalität der Komponente (B) sicherzustellen, kann (B) gegebenenfalls mit Diisocyanaten, wie Hexamethylendiisocyanat, Toluylendiisocyanat oder Polyisocyanat umgesetzt werden. Beispielsweise können Epoxidverbindungen die eine Epoxidgruppe besitzen, aber noch andere funktionelle Gruppen, z.B. OH-Gruppen tragen, mit Diisocyanaten umgesetzt werden. Gegebenenfalls können die Epoxidharze mit partiell blockierten Di- und Polyisocyanaten weiter umgesetzt werden.

Das erfindungsgemässe, aus den Komponenten (A) und (B) erhaltene Polyadditions/Polykondensationsprodukt wird bevorzugt aus einem Phenol/Epoxid-Gruppenverhältnis von 1:0,1 bis 1:0,9 erhalten, ist im wesentlichen epoxidgruppenfrei und sollte zum Zeitpunkt der Verarbeitung nicht mehr als 0,25 Epoxidgruppen pro Molekül Umsetzungsprodukt enthalten. Gegebenenfalls können die nach der Herstellung des Bindemittels überschüssigen Epoxidgruppen durch Mercaptane und/oder Säuren entfernt werden.

Das erfindungsgemässe Polyadditions/Polykondensationsprodukt (Festharz) enthält im allgemeinen 0,5 bis 25, vorzugsweise 2,5 bis 15 Gew.% der Gruppierung der Formel (I).

Zusätze zu den erfindungsgemässen Polyadditions/Polykondensationsprodukten können Polybutadienöle oder andere Kohlenwasserstofföle sowie blockierte Urethangruppen aufweisende Verbindungen sein, wie sie z.B. in DE-OS 27 11 425 und DE-OS 27 55 907 beschrieben worden sind. Ausserdem sind Bindemittel nach DE-OS 26 06 831 geeignet.

Die erfindungsgemässen Polyadditions/Polykondensationsprodukte können mit üblichen Lacklösungsmitteln, wie Alkoholen von einer Kettenlänge von $C_4$ bis $C_{16}$, z.B. Isopropanol, Dekanol, n- und iso-Butanol, Alkylaromaten, z.B. Toluol und Cycloaliphaten oder mit wässrigen organischen Lösungsmittel (-gemischen) verdünnt, gegebenenfalls zusammen mit Pigmenten, Füllstoffen und üblichen Hilfsmitteln unter Anwendung konventioneller Lackiermethoden, wie Spritzen, Tauchen, Fluten, auf das zu überziehende bzw. zu lackierende Substrat, wie z.B. auf Holz, Metall, Glas oder Keramik, aufgetragen, getrocknet und bei Temperaturen von über 170 °C gehärtet werden. Die damit erhaltenen Überzüge zeichnen sich beispielsweise durch hohe Härte und Lösungsmittelbeständigkeit aus.

Bevorzugt werden die erfindungsgemässen Lackbindemittel, jedoch mit Säuren, wie z.B. Phosphorsäure und ihren Derivaten, vorzugsweise mit wasserlöslichen Carbonsäuren, wie z.B. Essigsäure, Ameisensäure, Milchsäure, protoniert angewandt. Das protonierte Lackbindemittel ist wasserverdünnbar und kann unter Anwendung der oben angeführten konventionellen Lackiermethoden verarbeitet werden, wobei ebenfalls Überzüge mit sehr wertvollen Eigenschaften erhalten werden. Der Protonierungsgrad soll jedoch so gering wie möglich gehalten werden.

Die bevorzugte Verwendung der protonierten erfindungsgemässen Lackbindemittel ist die kathodische Elektrotauchlackierung elektrisch leitender Flächen, z.B. von Metallteilchen, Blechen usw. aus Messing, Kupfer, Aluminium, Eisen und Stahl, die gegebenenfalls chemisch vorbehandelt, z.B. phosphatiert sind.

Die wässrigen Lösungen oder Dispersionen der zumindest teilweise als Salz einer wasserlöslichen Carbonsäure vorliegenden erfindungsgemässen Lackbindemittel können auch im Gemisch mit diesen durch Kataphorese elektrochemisch abscheidbare Hilfsstoffe enthalten, wie Pigmente, lösliche Farbstoffe, Lösungsmittel, Verlaufsverbesserer, Stabilisatoren, Härtungskatalysatoren, besonders die Härtung beschleunigende metallhaltige Mangan- bzw. Kobaltnaphthenate oder -octoate, ausserdem Metallsalze, wie sie zum bekannten Stand der Technik gehören und z.B. in der DE-OS 25 41 234 und DE-OS 24 57 437 genannt sind, insbesonders aber das zur Komplexbildung mit dem erfindungsgemässen Bindemittel befähigte $Cu^{++}$-Ion, Antischaummittel sowie andere Hilfs- und Zusatzstoffe.

Die erfindungsgemässen Lackbindemittel können sowohl als Hauptträgerharz für die elektrische Abscheidung als auch als Trägerharz in der Pigmentpaste benutzt werden. Alternativ kann das Harz als Hauptträgerharz für die elektrisch abzuscheidende Masse in Kombination mit einer üblichen Pigmentpaste verwendet werden. Ausserdem kann das Harz als Trägerharz in einer Pigmentpaste in Kombination mit einem bekannten polyamingruppenhaltigen Trägerharz für die kathodisch elektrische Abscheidung verwendet werden. Die amingruppenhaltigen, kationisch abscheidbaren Harze sind bekannt und müssen deshalb nicht im einzelnen beschrieben werden. Beispiele von geeigneten Harzen schliessen tertiäre aminsalzhaltige Harze ein, wie sie in der DE-OS 26 03 666 offenbart sind, und quaternäre ammoniumsalzgruppenhaltige Harze, wie sie in der US-PS 3 839 252 beschrieben sind.

Zur kathodischen Elektrotauchlackierung wird im allgemeinen durch Verdünnen mit entionisiertem Wasser ein Feststoffgehalt des Elektrotauchbades von 5 bis 20 Gew.% eingestellt. Die Abscheidung erfolgt im allgemeinen bei Temperaturen von 15 bis 40 °C während einer Zeit von 1 bis 2 Minuten bei Bad-pH-Werten von 5,0 bis 8,5, vorzugsweise pH 6,0 bis 7,5 bei Abscheidungsspannungen zwischen 50 und 500 Volt. Nach dem Abspülen des auf dem elektrisch leitenden Körper kathodisch abgeschiedenen Films wird das selbstvernetzende Bindemittel bei etwa 150 bis 220 °C

etwa 10 bis 30 Minuten, vorzugsweise bei 170 bis 200 °C etwa 20 Minuten gehärtet.

Die erfindungsgemässen Polyadditions/Polykondensationsprodukte ergeben bei der kathodischen Abscheidung Überzüge mit hervorragenden mechanischen Eigenschaften, wie grosse Härte und Kratzfestigkeit, bei sehr guter Elastizität und fester Haftung auf dem Substrat.

Weiterhin zeichnen sich die damit erhaltenen Überzüge durch hohe Lösungsmittelbeständigkeit und Beständigkeit im Salzsprühtest aus.

Die in den Beispielen genannten Teile und Prozente sind, sofern nicht anders angegeben, Gewichtsteile bzw. Gewichtsprozente.

Beispiel 1

a) Herstellung eines Ethergruppen enthaltenden phenolgruppenhaltigen Vorproduktes

Es werden 210 Teile 4-Vinylcyclohexendioxid (z. B. ERL 4206 der Fa. UCC) und 500 Teile Bisphenol unter Stickstoffspülung 1,5 Stunden bei 180 °C gerührt und dann mit 380 Teilen Toluol verdünnt. Der Feststoffgehalt beträgt 67%.

b) Tscherniac-Einhorn/Michael-Reaktion

434,3 Teile des unter a) hergestellten Produktes, 136,5 Teile Acrylamid, 79,7 Teile Paraformaldehyd, 91 Teile p.tert.-Butylphenol, 0,4 Teile Phenothiazin und 78 Teile Bisphenol A werden bei 115 °C gelöst. Man kühlt auf 60 °C ab und gibt 1 Teil Bortrifluoridethyletherat zu. Nach 30 Minuten Reaktion bei 60 °C erfolgt die weitere Zugabe von 1 Teil Bortrifluoridethyletherat und nach weiteren 30 Minuten bei 60 °C werden nochmals 0,7 Teile Bortrifluoridethyletherat zugegeben. Man lässt dann noch 3 Stunden bei 60 °C nachreagieren. Anschliessend wird bei 120 °C das Wasser ausgekreist. Dann tropft man bei 90 °C 202 Teile Diethanolamin zu, lässt noch 2 Stunden bei 90 °C nachreagieren und verdünnt dann mit 29,4 Teilen Isobutanol, 29,4 Teilen Isopropanol, 110 Teilen Ethylglykol und 110 Teilen Butylglykol. Der Feststoffgehalt beträgt 58,9%.

c) Herstellung des Elektrotauchlackbindemittels

Es werden 288,1 Teile des unter b) hergestellten Produktes, 125 Teile Bisphenol A, 33,5 Teile Paraformaldehyd, 37,5 Teile Diethanolamin, 40 Teile Dibutylamin, 50 Teile Dihexylamin und 25 Teile Isobutanol 15 Minuten bei 50 °C und anschliessend 2,5 Stunden bei 80 °C gerührt. Dann erfolgt die Zugabe von 137,3 Teilen eines Diglycidylethers aus Bisphenol A und Epichlorhydrin mit einem Epoxidwert von 0,2, 54,7 Teilen eines Triglycidylethers aus Pentaerythrit und Epichlorhydrin mit einem Epoxidwert von 0,62 und 50 Teilen Isobutanol. Bei 70 °C lässt man nachreagieren, bis eine Viskosität von 680 mPas (gemessen bei 75 °C mit dem ICI-Platte-Konus-Viskosimeter der Fa. Epprecht) erreicht ist. Schliesslich wird mit 50 Teilen Isobutanol verdünnt. Der Feststoffgehalt beträgt 74,1%.

d) Elektrotauchlackierung und Prüfung

Zur Herstellung eines 10%igen Lackbades werden 100 Teile des unter c) hergestellten Festharzes, 80 ppm $Cu^{++}$ (berechnet auf Badvolumen) als Kupferacetatlösung und 1 Teil Co-Soligen® (der Fa. Hoechst AG; Co-Gehalt 8 Gew.%) gut gemischt, mit 1,8% Essigsäure protoniert und mit vollentsalztem Wasser auf 1000 Teile aufgefüllt. Das Lackbad wird dann 48 Stunden bei 30 °C ausgerührt; nach dem Ausrühren weist es einen pH-Wert von 7,4 und einen Leitwert von 1180 $\mu S.cm^{-1}$ auf. Vor dem Abscheiden werden noch 10 Teile Isodekanol eingerührt. Auf phosphatierten, als Kathode geschalteten Stahlblechen erhält man nach der Abscheidung (2 Minuten bei 85 Volt und 30 °C) und Härtung (20 Minuten bei 180 °C) einen glatten Überzug mit einer Schichtdicke von 14–16 µm, der eine Erichsentiefung von 8,9 mm aufweist.

Die Korrosionsprüfung nach DIN 50021 ergab nach 10 Tagen auf phosphatierten Stahlblechen, die wassernachgespült waren, (z. B. Bonder® 125 W der Fa. Metallgesellschaft) eine Unterwanderung von 3,4–5,8 mm und auf eisenphosphatierten Stahlblechen, die wassernachgespült waren (z. B. Bonder® 1041 W) eine Unterwanderung von 0,3 bis 1,2 mm (gemessen vom Schnitt). Der Einbrennverlust beträgt ca. 9%.

Beispiel 2

a) Herstellung eines Ethergruppen enthaltenden phenolgruppenhaltigen Vorproduktes

Es werden 420 Teile eines Triglycidylethers aus Pentaerythrit und Epichlorhydrin mit einem Epoxidwert von 0,62 und 73,2 Teile Phenol 30 Minuten bei 180 °C gerührt. Dann erfolgt die Zugabe von 364,6 Teilen Bisphenol A. Dann lässt man 1 Stunde bei 180 °C nachreagieren. Anschliessend verdünnt man mit 420 Teilen Toluol. Der Feststoffgehalt beträft 67,8%.

b) Tscherniac-Einhorn/Michael-Reaktion

430 Teile des unter a) hergestellten Produktes, 136,5 Teile Acrylamid, 79,7 Teile Paraformaldehyd, 91 Teile p.-tert.-Butylphenol, 0,4 Teile Phenothiazin und 78 Teile Bisphenol A werden bei 115 °C gelöst. Man kühlt dann auf 60 °C und gibt 1 Teil Bortrifluoridethyletherat zu. Nach 30 Minuten Reaktion bei 60 °C erfolgt die zweite Zugabe von 1 Teil Bortrifluoridethyletherat und nach weiteren 30 Minuten bei 60 °C werden noch 0,7 Teile Bortrifluoridethyletherat zugegeben. Man lässt 3 Stunden unter Rühren bei 60 °C nachreagieren. Anschliessend wird bei 120 °C das Wasser ausgekreist. Danach tropft man bei 90 °C 202 Teile Diethanolamin zu, lässt noch 2 Stunden bei 90 °C nachreagieren und verdünnt dann mit 29,4 Teilen Isobutanol, 29,4 Teilen Isopropanol, 110 Teilen Butylglykol und 110 Teilen Ethylglykol. Der Feststoffgehalt beträgt 67,3 %.

c) Herstellung des Elektrotauchlackbindemittels

Es werden 252,6 Teile des unter b) hergestellten Produktes, 33,5 Teile Paraformaldehyd, 125 Teile Bisphenol A, 37,3 Teile Diethanolamin, 40 Teile Dibutylamin, 50 Teile Dihexylamin und 60 Teile Isobutanol 15 Minuten bei 50 °C und anschliessend 2,5 Stunden bei 80 °C gerührt. Dann erfolgt die Zugabe von 137,3 Teilen eines Diglycidylethers aus Bisphenol A und Epichlorhydrin mit einem Epoxidwert von 0,2, 54,7 Teilen eines Triglycidylethers aus Pentaerythrit und Epichlorhydrin mit einem Epoxidwert von 0,62 und 50 Teilen Isobutanol. Bei 70 °C lässt man nachreagieren, bis eine Viskosität von 1350 mPas (gemessen bei 75 °C mit dem ICI-Platte-Konus-Viskosimeter) erreicht ist. Schliesslich wird mit 50 Teilen Isobutanol verdünnt. Der Feststoffgehalt beträgt 73,3%.

d) Elektrotauchlackierung und Prüfung

Zur Herstellung eines 10%igen Lackbades werden 100 Teile des Festharzes c) 80 ppm $Cu^{++}$ (berechnet auf Badvolumen) als Kupferacetatlösung und 1 Teil Co-Soligen gut gemischt, mit 1,6% Essigsäure (berechnet auf Festharz) protoniert und mit vollentsalztem Wasser auf 1000 Teile aufgefüllt. Das Lackbad wird dann 48 Stunden bei 30 °C gerührt; es hat nach dem Ausrühren einen pH-Wert von 7,25 und einen Leitwert von 1075 $\mu S.cm^{-1}$. Vor dem Abscheiden werden noch 7,5 Teile Isodekanol eingerührt. Auf phosphatierten, als Kathode geschalteten Stahlblechen erhält man nach der Abscheidung (2 Minuten bei 85 Vol und 30 °C) und Härtung (20 Minuten bei 180 °C) einen glatten Überzug mit einer Schichtdicke von 14 bis 16 µm, der eine Erichsentiefung von 8,5 mm aufweist.

Die Korrosionsprüfung nach DIN 50021 ergab nach 10 Tagen auf zinkphosphatierten Stahlblechen, die wassernachgespült waren, eine Unterwanderung von 1,5 bis 2,8 mm und auf eisenphosphatierten Stahlblechen, die wassernachgespült waren, eine Unterwanderung von 0,9 bis 1,5 mm (gemessen vom Schnitt) . Der Einbrennverlust beträgt ca. 9%.

Beispiel 3

a) Herstellung eines ethergruppen- und phenolgruppenhaltigen Vorproduktes

Es werden 210 Teile 4-Vinylcyclohexendioxid (z.B. Bakelite ® Epoxy Resin ERL 4206 der Fa. UCC) und 73,2 Teile Phenol 30 Minuten bei 180 °C gerührt. Dann erfolgt die Zugabe von 364,6 Teilen Bisphenol A, und man lässt 1 Stunde bei 190 °C nachreagieren. Anschliessend verdünnt man mit 310 Teilen Toluol. Der Feststoffgehalt beträgt 66,1%.

b) Tscherniac-Einhorn/Michael-Reaktion

439,6 Teile des unter a) hergestellten Produktes, 136,5 Teile Acrylamid, 79,7 Teile Paraformaldehyd, 91 Teile p.-tert.-Butylphenol, 0,4 Teile Phenothiazin und 78 Teile Bisphenol A werden bei 115 °C gelöst. Man kühlt auf 60 °C und gibt 1 Teil Bortrifluoridethyletherat zu. Nach 30 Minuten Reaktion bei 60 °C erfolgt die zweite Zugabe von 1 Teil Bortrifluoridethyletherat, und nach weiteren 30 Minuten bei 60 °C werden nochmals 0,7 Teile Bortrifluoridethyletherat zugegeben. Dann lässt man 3 Stunden bei 60 °C nachreagieren. Anschliessend wird bei 120 °C das Wasser ausgekreist. Danach tropft man bei 90 °C 202 Teile Diethanolamin zu, lässt noch 2 Stunden bei 90 °C nachreagieren und verdünnt dann mit 29,4 Teilen Isobutanol, 29,4 Teilen Isopropanol, 110 Teilen Butylglykol und 110 Teilen Ethylglykol. Der Feststoffgehalt beträgt 59%.

c) Herstellung des Elektrotauchbindemittels

Es werden 288,1 Teile des unter b) hergestellten Produktes, 125 Teile Bisphenol A, 33,5 Teile Paraformaldehyd, 37,3 Teile Diethanolamin, 40 Teile Dibutylamin, 50 Teile Dihexylamin und 25 Teile Isobutanol 15 Minuten bei 50 °C und anschliessend 2,5 Stunden bei 80 °C gerührt. Dann erfolgt die Zugabe von 137,3 Teilen eines Diglycidylethers (z.B. Epoxy 1/33) aus Bisphenol A und Epichlorhydrin mit einem Epoxidwert von 0,2; 54,7 Teilen eines Triglycidylethers aus Pentaerythrit und Epichlorhydrin mit einem Epoxidwert von 0,62 und 50 Teilen Isobutanol. Bei 70 °C lässt man dann nachreagieren, bis eine Viskosität von 590 mPas (gemessen bei 75 °C mit dem ICI-Platte-Konus-Viskosimeter) erreicht ist. Schliesslich wird mit 50 Teilen Isobutanol verdünnt. Der Feststoffgehalt beträgt 73,4%.

d) Elektrotauchlackierung und Prüfung

Zur Herstellung eines 10%igen Lackbades werden 100 Teile des Festharzes c), 80 ppm $Cu^{++}$ (berechnet auf Badvolumen) als Kupferacetatlösung und 1 Teil Co-Soligen gut gemischt, mit 1,8 Teilen Essigsäure (berechnet auf Festharz) protoniert und mit vollentsalztem Wasser auf 1000 Teile aufgefüllt. Das Lackbad wird 48 Stunden bei 30 °C ausgerührt, nach dem Ausrühren weist es einen pH-Wert von 7,45 und einen Leitwert von 1158 $\mu S.cm^{-1}$ auf. Vor dem Abscheiden werden noch 10 Teile Isodekanol eingerührt. Auf phosphatierten, als Kathode geschalteten Stahlblechen erhält man nach der Abscheidung (2 Minuten bei 110 Volt und 30 °C) und Härtung (20 Minuten bei 180 °C) einen glatten Überzug mit einer Schichtdicke von 14 bis 15 µm, der eine Erichsentiefung von 8,9 mm aufweist. Die Korrosionsprüfung nach DIN 50 021 ergab nach 10 Tagen auf zinkphosphatierten Stahlblechen, die wassernachgespült waren, eine Unterwanderung von 2,3 bis 3,3 mm und auf eisenphosphatierten Stahlblechen, die wassernachgespült waren, eine Unterwanderung von 0,6 bis 2,4 mm (gemessen vom Schnitt). Der Einbrennverlust beträgt ca. 9%.

Beispiel 4

a) Tscherniac-Einhorn-Reaktion eines Phenolgruppen enthaltenden Indenharzes mit einem Gehalt von 6,1% an phenolischen OH-Gruppen (Hersteller: Rüttgerswerke G):

Es werden 357,3 Teile des oben genannten Indenharzes, 91 Teile Acrylamid, 53,1 Teile Paraformaldehyd, 0,2 Teile Phenothiazin und 62 Teile Toluol bei 115 °C gelöst. Man kühlt auf 60 °C und gibt 0,7 Teile Bortrifluoridethyletherat zu. Nach 30 Minuten Reaktion bei 60 °C erfolgt die zweite Zugabe von 0,7 Teilen Bortrifluoridethyletherat und nach weiteren 30 Minuten bei 60 °C werden 0,4 Teile Bortrifluoridethyletherat zugegeben. Dann lässt man 3 Stunden bei 60 °C nachreagieren. Anschliessend wird bei 120 °C das Wasser ausgekreist. Danach tropft man bei 90 °C 134,6 Teile Diethanolamin zu und lässt noch 2 Stunden bei 90 °C nachreagieren. Mit 50 Teilen Isopropanol und 50 Teilen Isobutanol wird schliesslich verdünnt. Der Feststoffgehalt beträgt 81,6%.

b) Herstellung des Elektrotauchlackbindemittels

Es werden 205,8 Teile des unter a) hergestellten Produktes, 82,5 Teile Bisphenol A, 26,7 Teile Paraformaldehyd, 29,9 Teile Diethanolamin, 58,9 Teile Dibutylamin, 65 Teile Isopropanol, 32,5 Teile Isobutanol und 38,1 Teile Toluol 15 Minuten bei 50 °C und anschliessend 2,5 Stunden bei 80 °C gerührt. Dann erfolgt die Zugabe von 142,1 Teilen eines Diglycidylethers aus Bisphenol A und Epichlorhydrin mit einem Epoxidwert von 0,1 und 46,9 Teilen Toluol. Nach weiteren 30 Minuten bei 75 bis 80 °C werden 102,9 Teile eines Diglycidylethers aus Bisphenol A und Epichlorhydrin mit einem Epoxidwert von 0,2, 52,2 Teilen eines Triglycidylethers aus Pentaerythrit und Epichlorhydrin mit einem Epoxidwert von 0,62 und 49,9 Teile Ethylglykol zugegeben. Bei 70 °C lässt man dann nachreagieren, bis eine Viskosität von 600 mPas (gemessen bei 75 °C mit einem ICI-Platte-Konus-Viskosimeter) erreicht ist. Die Reaktion wird dann mit 2,5 Teilen Merkaptoethanol abgebrochen. Der Feststoffgehalt beträgt 69,3%.

c) Elektrotauchlackierung und Prüfung

Zur Herstellung eines 10%igen Lackbades werden 100 Teile des Festharzes c), 6 Teile Butylglykol und 120 ppm $Cu^{++}$ (berechnet auf Badvolumen) als wässrige Kupferacetatlösung und 50 ppm $Co^{++}$ als Co-Nitrat gut gemischt, mit 1,8 % Essigsäure (berechnet auf Festharz) protoniert und mit vollentsalztem Wasser auf 1000 Teile verdünnt. Das Lackbad wird 48 Stunden bei 30 °C gerührt; es weist dann einen pH-Wert von 6,9 und einen Leitwert von 1242 $\mu S.cm^{-1}$ auf. Schliesslich werden noch 5 Teile Isodekanol und 8 Teile Butylglykol zugegeben. Auf als Kathode geschalteten phosphatierten Stahlblechen erhält man nach der Abscheidung (2 Minuten bei 270 Volt bei 30 °C) und Härtung (20 Minuten bei 180 °C) einen Überzug mit einer Schichtdicke von 9 bis 11 µm, der eine Erichsentiefung von 8,8 mm aufweist.

Die Korrosionsprüfung nach DIN 50 021 ergab nach 10 Tagen auf zinkphosphatierten Stahlblechen, die wassernachgespült waren, eine Unterwanderung von 0,7 bis 3 mm und auf eisenphosphatierten Stahlblechen, die wassernachgespült waren, eine Unterwanderung von 0,5 bis 2 mm (gemessen vom Schnitt). Der Einbrennverlust beträgt ca. 8%.

Vergleichsbeispiel

Entsprechend Beispiel 1 der DE-AS 24 19 179, aber ohne den Zusatz des Tetramethoxybutylethers des Acetylendiharnstoffes) wurde ein Elektrotauchlackbindemittel hergestellt und auf den Einbrennverlust geprüft.

Dazu wurde unter den Bedingungen der Bestimmung des Feststoffgehaltes (2 Stunden bei 125 °C) ein frischbeschichtetes Probeblech getrocknet und anschliessend unter den üblichen Einbrennbedingungen (20 Minuten bei 180 °C) weiter behandelt. Der Gewichtsverlust zwischen der getrockneten und der eingebrannten Probe beträgt 11,5%.

**Patentansprüche**

1. Durch Protonierung mit Säure wasserverdünnbare, stickstoffbasische Gruppen tragende Polyadditions/Polykondensationsprodukte, erhalten durch Polyaddition von

A) 5 bis 90 Gew.% Mannichbasen aus

a) Mono- und/oder Polyphenolen,

b) mindestens einem sekundären Amin $(b_1)$, das mindestens eine Hydroxyalkylgruppe enthält, oder einem Gemisch aus einem derartigen sekundären Amin $(b_1)$ mit einem anderen sekundären Amin $(b_2)$

und

c) Formaldehyd oder einer Formadehyd liefernden Verbindung mit

(B) 10 bis 95 Gew.% mindestens eines Epoxidharzes, dadurch gekennzeichnet, dass die Polyadditions/Polykondensationsprodukte aus (A) und (B) an aromatische Ringe gebundene Gruppen der Formel (I)

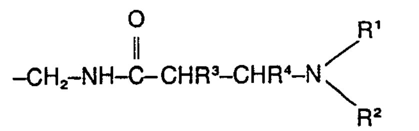

(I)

tragen, worin $R^1$ und $R^2$ untereinander gleich oder verschieden sind und für einen Alkylrest mit 1 bis 9 Kohlenstoffatomen, eine Hydroxyalkyl- oder Alkoxyalkylgruppe mit 2 bis 10 Kohlenstoffatomen stehen oder miteinander zu einem 5- oder 6-gliedrigen Ring verknüpft sind, $R^3$ und $R^4$ untereinander gleich oder verschieden sind und für Wasserstoff oder eine Methylgruppe stehen, mit der Massgabe, dass Polyadditions/Polykondensationsprodukte aus (A) und (B), die neben den Gruppen der Formel (I) Gruppen der Formel

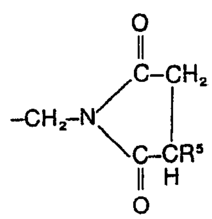

,

worin $R^5$ für einen Polydienylrest steht, ausgenommen sind.

2. Polyadditions/Polykondensationsprodukte nach Anspruch 1, dadurch gekennzeichnet, dass die zur Herstellung der Mannichbase (A) verwendete Komponente $(b_1)$ Diethanolamin oder ein Gemisch aus Diethanolamin und einem anderen sekundären Amin $(b_2)$ ist.

3. Polyadditions/Polykondensationsprodukte nach Anspruch 1 oder 2, dadurch gekennzeichnet, dass die zur Herstellung der Mannichbase (A) verwendeten Mono- und/oder Polyphenole bestehen aus

$(a_1)$ mindestens einem ein- oder mehrkernigen Mono- und/oder Polyphenol, das zumindest teilweise durch

(a$_2$) ein ein- oder mehrkerniges Mono- und/oder Polyphenol ersetzt ist, das Gruppen der allgemeinen Formel (I)

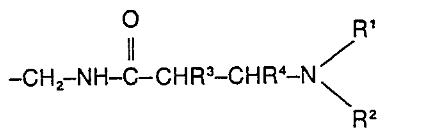

(I)

trägt, worin R$^1$ bis R$^4$ die oben angegebene Bedeutung haben.

4. Polyadditions/Polykondensationsprodukte nach Anspruch 3, dadurch gekennzeichnet, dass als Komponente (B) ein Umsetzungsprodukt von Polyepoxidverbindungen mit geringeren als den äquivalenten Mengen an ein- oder mehrkernigen Mono- und/oder Polyphenolen (a$_2$) verwendet wird.

5. Verwendung der Polyadditions/Polykondensationsprodukte nach einem der vorhergehenden Ansprüche zur kathodischen Elektrotauchlackierung metallischer Gegenstände.

## Claims

1. A polyadduct/polycondensate which can be diluted with water when protonated with an acid, contains basic nitrogen groups, and is obtained by the polyaddition reaction of (A) from 5 to 90% by weight of a Mannich base obtained from

a) monophenols and/or polyphenols,

b) at least one secondary amine (b$_1$) which contains at least one hydroxyalkyl group, or a mixture of a secondary amine of this type (b$_1$) with another secondary amine (b$_2$),

and

c) formaldehyde or a formaldehyde donor, with (B) from 10 to 95% by weight of at least one epoxy resin, wherein the polyadduct/polycondensate of (A) with (B) contains groups, which are bonded to aromatic rings, of the formula (I)

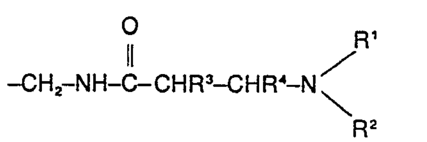

(I) ,

where R$^1$ and R$^2$ are identical or different and are each alkyl of 1 to 9 carbon atoms, or hydroxyalkyl or alkoxyalkyl, each of 2 to 10 carbon atoms, or are linked to one another to form a 5-membered or 6-membered ring, and R$^3$ and R$^4$ are identical or different and each is hydrogen or methyl, with the proviso that the polyadduct/polycondensate of (A) and (B) which contains groups of the formula

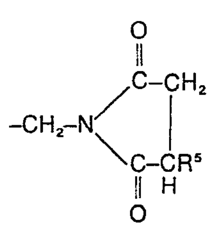

,

where R$^5$ is polydienyl, in addition to groups of the formula (I), are excluded.

2. A polyadduct/polycondensate as claimed in claim 1, wherein the component (b$_1$) used to prepare the Mannich base (A) is either diethanolamine or a mixture of diethanolamine and another secondary amine (b$_2$).

3. A polyadduct/polycondensate as claimed in claim 1 or 2, wherein the monophenols and/or polyphenols used to prepare the Mannich base (A) are

(a$_1$) one or more mononuclear or polynuclear monophenols and/or polyphenols, some or all of which are replaced by

(a$_2$) mononuclear or polynuclear monophenols and/or polyphenols which contain groups of the general formula (I)

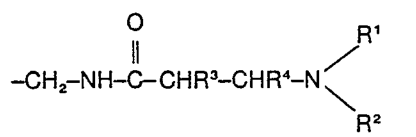

(i

where R$^1$, R$^2$, R$^3$ and R$^4$ have the above meanings.

4. A polyadduct/polycondensate as claimed in claim 3, wherein a reaction product of a polyepoxide compound with less than the equivalent amount of a mononuclear or polynuclear monophenol and/or polyphenol (a$_2$) is used as component (B).

5. The use of a polyadduct/polycondensate as claimed in any of the preceding claims for the cathodic electrocoating of metal articles.

## Revendications

1. Produits de polyaddition/polycondensation portant des groupes azote-basiques diluables dans l'eau par protonation avec des acides, et obtenus par polyaddition de:

A) 5 à 90% en poids de bases de Mannich préparées à partir de

a) mono- et/ou polyphénols

b) au moins une amine secondaire (b$_1$), qui contient au moins un groupe hydroxyalkyle, ou un mélange d'une telle amine secondaire (b$_1$) avec une autre amine secondaire (b$_2$)

et

c) formaldéhyde ou un composé générant un formaldéhyde, avec

B) 10 à 95% en poids d'au moins une résine époxyde, caractérisée par le fait que les produits de polyaddition/polycondensation de (A) et (B) portent, liés à des noyaux aromatiques, des groupes de formule (I)

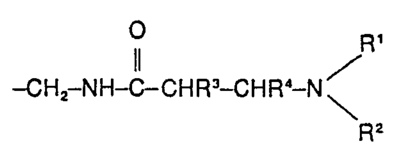

(I)

où R$^1$ et R$^2$ sont identiques ou différents l'un de l'autre et représentent un reste alkyle ayant 1 à 9

atomes de carbone, un groupe hydroxyalkyle ou alcoxyalkyle de 2 à 10 atomes de carbone ou sont reliés entre eux pour former un noyau à 5 ou 6 chaînons, $R^3$ et $R^4$ sont identiques ou différents l'un de l'autre et représentent hydrogène ou un groupe méthyle, sous réserve que soient exclus les produits de polyaddition/polycondensation de (A) et (B) qui, à côté des groupes de formule (I), portent des groupes de formule

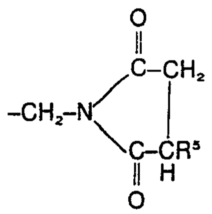

où $R^5$ représente un reste polydiényle.

2. Produits de polyaddition/polycondensation selon la revendication 1, caractérisés par le fait que le composant ($b_1$) utilisé pour la préparation de la base de Mannich (A) est la diéthanolamine ou un mélange de diéthanolamine et d'une autre amine secondaire ($b_2$).

3. Produits de polyaddition/polycondensation selon la revendication 1 ou 2, caractérisés par le fait que les mono- et/ou polyphénols utilisés pour la préparation de la base de Mannich (A) sont constitués par

($a_1$) au moins un mono- et/ou polyphénol à un ou plusieurs noyaux, qui est remplacé, au moins partiellement, par

($a_2$) un mono- et/ou polyphénol à un ou plusieurs noyaux, qui porte des groupes de formule générale (I)

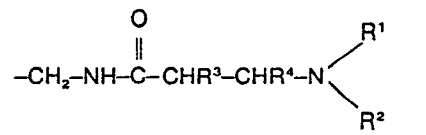 (I)

où $R^1$ à $R^4$ ont la signification donnée ci-dessus.

4. Produits de polyaddition/polycondensation selon la revendication 3, caractérisés par le fait que, comme composant (B), on utilise un produit de réaction de composés polyépoxydes avec moins de la quantité équivalente de mono- et/ou polyphénols ($a_2$) à un ou plusieurs noyaux.

5. Utilisation des produits de polyaddition/polycondensation selon l'une des revendications précédentes pour la peinture par électrodéposition cathodique d'objets métalliques.